# EUROPÄISCHE PATENTSCHRIFT

(11) **EP 3 172 104 B1**
(45) Veröffentlichungstag und Bekanntmachung des Hinweises auf die Patenterteilung: **12.09.2018**
(21) Anmeldenummer: 15745419.0
(22) Anmeldetag: 20.07.2015
(51) Int. Cl.: B61D 17/12, B61D 27/00, B60H 1/00

(54) **LUFTVERTEILEINRICHTUNG FÜR DEN INNENRAUM EINES SCHIENENFAHRZEUGS**
AIR DISTRIBUTION DEVICE FOR THE INTERIOR OF A RAIL VEHICLE
DISPOSITIF DE DISTRIBUTION D'AIR POUR L'ESPACE INTÉRIEUR D'UN VÉHICULE FERROVIAIRE

(30) Priorität: 24.07.2014 DE 102014214581
(43) Veröffentlichungstag der Anmeldung: 31.05.2017
(73) Patentinhaber: Bombardier Transportation GmbH, 10785 Berlin (DE)
(72) Erfinder: GRZESIUK, Tomasz, 1120 Wien (AT)
(74) Vertreter: Patentanwälte Bressel und Partner mbB
(86) Internationale Anmeldenummer: PCT/EP2015/066547
(87) Internationale Veröffentlichungsnummer: WO 2016/012397

(56) Entgegenhaltungen:
- WO-A1-2008/090232
- WO-A1-2012/101161
- WO-A1-2014/012711
- US-A- 2 647 452

## Beschreibung

Die vorliegende Erfindung betrifft eine Luftverteileinrichtung zur Verteilung von einströmender Luft im Innenraum eines Schienenfahrzeugs sowie ein Verfahren zur Steuerung einer Luftstromverteilung im Innenraum eines Schienenfahrzeugs.

Zur Belüftung oder Klimatisierung eines Innenraums eines Schienenfahrzeugs, beispielsweise eines Fahrgastraums, werden im Stand der Technik verschiedene Lösungen vorgeschlagen.

WO 2008/090232 A1 betrifft ein Verfahren zur Klimatisierung eines Fahrzeugs, insbesondere eines Schienenfahrzeugs, bei dem einem Innenraum des Fahrzeugs in einem Kühlbetrieb gekühlte Luft als Zuluft zugeführt wird und in einem Heizbetrieb erwärmte Luft als Zuluft zugeführt wird. In einem Heizbetrieb wird wenigstens ein Teil der Zuluft im Bereich einer Decke des Innenraums zugeführt, wobei zumindest mehr als 50 % der Zuluft im Bereich der Decke zugeführt wird.

DE 196 54 633 C1 beschreibt ein Heizungs- und Lüftungssystem, bei dem im Dachraum eines Fahrzeugs ein sich über die gesamte Fahrzeuglänge erstreckender Doppelluftkanal angeordnet ist, dessen Teilluftkanäle als Kühlluftkanal und als Heizluftkanal ausgebildet sind und mit einem zentralen Klimaaggregat verbunden sind. Mittels geeigneter Luftleitsysteme sind die zentralen Sitzbereiche und die Bereiche der Gänge sowie der Einstiege in den Heiz- und/oder Kühlluftstrom einbezogen. Getrennte Teilluftkanäle für kalte Luft und für Heizluft sind jedoch relativ aufwendig in der Realisierung.

WO 2014/012711 A1 betrifft ein Luftkanalsystem für ein Schienenfahrzeug mit einem ersten Teillüftungskanal, welcher zumindest eine Öffnung zu einem zweiten Teillüftungskanal und zumindest einen Luftauslass zur Belüftung des Innenraums des Schienenfahrzeugs umfasst. Es ist eine verformbare und/oder bewegbar gehaltene Membran so am Luftkanalsystem angeordnet, dass sie in einem ersten Zustand die Öffnung verkleinert oder schließt und den Luftauslass freigibt und dass sie in einem zweiten Zustand den Luftauslass verkleinert oder schließt und die Öffnung freigibt. Eine solche Membran erschwert allerdings eine Luftkanalreinigung oder Wartung und es ist bei der Wartung mit aufwendigen Demontagen und Kosten zu rechnen.

DE 10 2008 032 576 A1 offenbart ein Klimatisierungssystem eines Abteils eines Schienenfahrzeugs, umfassend: Mittel zur Luftbehandlung zum Aufheizen und/oder Kühlen der Luft, ein erstes Luftverteilungsnetz im unteren Teil des Abteils, und ein zweites Luftverteilungsnetz im oberen Teil des Abteils. Die Mittel zur Luftbehandlung sind dazu vorgesehen, in dem ersten Netz und in dem zweiten Netz einen ersten Luftstrom und einen zweiten Luftstrom mit unterschiedlichen Temperaturen zu verteilen. Zwei Luftverteilnetze sind bei begrenztem Bauraum in einem Schienenfahrzeug schwer zu realisieren und es resultiert ein erhöhter Wartungsaufwand.

Eine Aufgabe der vorliegenden Erfindung besteht darin, für eines oder mehrere dieser Probleme eine Lösung anzugeben.

Nach einer grundlegenden Idee der Erfindung sind zwei Lufttransporträume, insbesondere zwei Luftkanäle, über eine Öffnung miteinander verbunden und mittels eines Lüfters ist das Verhältnis der Luftmenge, die durch den ersten Lufttransportraum geleitet oder transportiert wird, zu der Luftmenge, die durch den zweiten Lufttransportraum geleitet oder transportiert wird, einstellbar.

Es sind auch die beiden Lufttransporträume ganz oder teilweise in verschiedenen Bereichen in einem Schienenfahrzeug anordenbar. Beide Lufttransporträume weisen Luftaustrittsöffnungen auf, auch bezeichnet als Luftauslässe, die in verschiedenen Bereichen eines Innenraums eines Schienenfahrzeugs angeordnet werden können. D.h. die Luftauslässe eines ersten Lufttransportraums können in einem anderen Bereich des Innenraums angeordnet werden als die Luftauslässe des zweiten Lufttransportraums.

Die Art des Betriebs, abgekürzt der "Betrieb", des Lüfters bezieht sich insbesondere auf einen oder mehrere der folgenden Parameter:
- Luftmenge oder Luftvolumenstrom, die/der vom oder durch den Lüfter hindurch transportiert wird. Es sind verschiedene Betriebsarten möglich, Nicht-Betrieb, Vollbetrieb, oder ein Betrieb zwischen Nichtbetrieb und Vollbetrieb, wobei jeder Zustand zwischen Nichtbetrieb oder Vollbetrieb ermöglicht sein kann, in Form einer kontinuierlichen oder diskreten Einstellung. Im Nichtbetrieb wird von dem Lüfter keine Luft transportiert und kein Luftvolumenstrom erzeugt. Im Vollbetrieb wird eine maximal von diesem Lüfter transportierbare Luftmenge transportiert oder ein maximaler Luftvolumenstrom erzeugt. Die transportierte Luftmenge oder der Luftvolumenstrom kann beispielsweise durch die Umdrehung pro Zeiteinheit eines Laufrads, auch bezeichnet als Lüfterrad, eingestellt werden.
- Transportrichtung der von dem Lüfter transportierten Luft bzw. Richtung des vom Lüfter erzeugten/transportieren Volumenstroms. Dies kann eingestellt werden durch die Rotationsrichtung eines Laufrads. Alternativ ausgedrückt werden kann dieser Parameter durch die Ansaugseite des Lüfters. Befindet sich die Ansaugseite auf der Seite des ersten Lufttransportraums, insbesondere eines ersten Luftkanals, kann ein Lufttransport vom ersten Lufttransportraum in den zweiten Lufttransportraum, insbesondere einen zweiten Luftkanal, stattfinden. Befindet sich die Ansaugseite auf der Seite des zweiten Lufttransportraums, insbesondere eines zweiten Luftkanals, kann ein Lufttransport vom zweiten Lufttransportraum in den ersten Lufttransportraum, insbesondere einen ersten Luftkanal, stattfinden, oder es kann ein Gegenstrom erzeugt werden, der einem Lufttransport von dem ersten Lufttransportraum in den zweiten Lufttransportraum entgegen wirkt.

Es kann die Art des Betriebs des Lüfters eingestellt, geregelt und/oder gesteuert werden, beispielsweise mit einer Stelleinrichtung, einer Steuereinrichtung oder einer Regelungseinrichtung.

Es kann durch die Art des Betriebs des Lüfters eingestellt, gesteuert und/oder geregelt werden, wie viel Luft durch welchen der Lufttransporträume geleitet wird und wie viel Luft infolge dessen durch die verschiedenen Luftaustrittsöffnungen in verschiedene Bereiche des Innenraums strömt. Die Erfindung lässt sich insbesondere zur gezielten Verteilung von Warm- oder Kaltluft in einem Innenraum nutzen.

Ein Vorteil der Erfindung ist, dass durch die Art des Betriebs des Lüfters eine Verteilung der Luft im Innenraum gezielt beeinflusst werden kann, insbesondere eine Verteilung von Warm- oder Kaltluft.

Weiterhin liegen in der vorliegenden Erfindung keine voneinander völlig getrennten Kanalsysteme vor, was die Konstruktion vereinfacht.

Schließlich ist es möglich, ein Klimagerät mit einem zentralen Ausgang für Warmluft oder Kaltluft zu verwenden und durch diese Öffnung Luft in das erfindungsgemäße System einzuströmen. Hiermit werden bauliche Vorteile erzielt, da nicht für Warm- und Kaltluftführung voneinander getrennte Kanalsysteme durch ein Fahrzeug geführt werden müssen, die in der Regel Überschneidungspunkte aufweisen. Es wird ferner der Vorteil erzielt, dass das System einfacher zu warten ist, weil bei zwei getrennten Kanalsystemen und bei begrenztem Bauraum im Schienenfahrzeug die Zugänglichkeit zu den einzelnen Systemen erschwert ist.

Die Erfindung betrifft insbesondere eine Luftverteileinrichtung nach Anspruch 1 und ein Verfahren zur Steuerung einer Luftstromverteilung im Innenraum eines Schienenfahrzeugs, wie in dem unabhängigen Verfahrensanspruch angegeben. Vorteilhafte Ausgestaltungen und Weiterbildungen der Erfindung sind Gegenstand von Unteransprüchen.

Angegeben von der Erfindung wird insbesondere eine Luftverteileinrichtung zur Verteilung von einströmender Luft im Innenraum eines Schienenfahrzeugs, aufweisend
- zumindest einen ersten Luftkanal, aufweisend erste Luftauslässe, die in einem Deckenbereich eines Innenraums des Schienenfahrzeugs anordenbar sind,
- zumindest einen zweiten Luftkanal, aufweisend zweite Luftauslässe, die in einem Bodenbereich des Innenraums des Schienenfahrzeugs anordenbar sind,
- zumindest eine Verbindungsöffnung, durch welche der erste Luftkanal und der zumindest eine zweite Luftkanal miteinander verbunden sind,
- zumindest einen Lüfter, der zum Beförderung von Luft von dem ersten Luftkanal in den zweiten Luftkanal, oder umgekehrt, eingerichtet ist, wobei durch die Art des Betriebs des Lüfters eine erste Luftmenge, die durch die ersten Luftauslässe in den Deckenbereich einströmt, und eine zweite Luftmenge, die durch die zweiten Luftauslässe in den Bodenbereich einströmt, in ihrem Verhältnis zueinander einstellbar sind.

Die Luft von bzw. in dem ersten Luftkanal ist vorzugsweise Luft, die in den ersten Luftkanal einströmt. Diese Luft kann beispielsweise Luft aus einer Klimatisierungseinrichtung, Außenluft, umgewälzte Innenluft oder eine Mischung einer oder mehrerer davon sein.

Mit der erfindungsgemäßen Luftverteilereinrichtung ist eine optimale Luftverteilung einströmender Luft in einem Innenraum eines Schienenfahrzeugs in Abhängigkeit von der Lufttemperatur erreichbar. Unabhängig von der Temperatur kann Luft in den Deckenbereich und den Bodenbereich verteilt werden Es kann die Verteilung und die relative Luftmenge durch den Betrieb des Lüfters, insbesondere durch die Stärke des Betriebs und/oder die Wahl der Ansaugseite des Lüfters, gesteuert werden.

Insbesondere vorteilhaft einsetzbar ist die Erfindung zur Verteilung von Warmluft oder Kaltluft. Es kann abhängig von der Lufttemperatur eine optimale Luftverteilung erreicht werden. Warme Luft kann zum Bodenbereich geführt werden, wodurch sie im Fahrzeug aufsteigen kann. Kalte Luft kann im Deckenbereich ausgeströmt werden und sinkt über die Luftauslässe im Deckenbereich nach unten, nach dem Prinzip einer Rieseldecke. Dadurch wird die physikalische Eigenschaft von Kalt- und Warmluft optimal genutzt und es wird eine angenehme und gleichmäßige Klimatisierung im Fahrzeug erreicht.

Die in den Innenraum eines Schienenfahrzeugs einströmende Luft wird erfindungsgemäß auch als Zuluft bezeichnet. Die einströmende Luft kann klimatisiert oder auf eine bestimmte Temperatur eingestellt sein, beispielsweise von einem Klimagerät. In einer anderen Variante ist die Luft Außenluft oder Umluft. Mischungen aus klimatisierter Luft, Umluft und Außenluft sind möglich.

Die Verbindungsöffnung kann eine Öffnung in einer Wand sein, die den ersten Luftkanal von einem zweiten Luftkanal trennt. Es ist alternativ möglich, ein Verbindungsmittel zwischen dem ersten und dem zweiten Luftkanal vorzusehen, beispielsweise einen Verbindungskanal, wobei die Verbindungsöffnung innerhalb des Verbindungsmittels gebildet ist. Ein Verbindungsmittel, insbesondere ein Verbindungskanal, verbindet den ersten Luftkanal von den zweiten Luftkanal.

Der erste Luftkanal kann vorzugsweise im Deckenbereich, insbesondere oberhalb der Decke eines Innenraums, des Schienenfahrzeugs geführt sein. Eine vorteilhafte Anordnung des ersten Luftkanals ist eine in Wagenkastenlängsrichtung verlaufende Anordnung, vorzugsweise eine mittige Anordnung. Der erste Luftkanal kann im Bodenbereich eine Vielzahl erste Luftauslässe aufweisen, durch welche Luft in den Deckenbereich eines Innenraums ausgeströmt werden kann. Die Einströmung durch die ersten Luftauslässe in den Deckenbereich kann direkt oder indirekt erfolgen. Bei einer indirekten Führung der Luft kann die Luft durch die ersten Luftauslässe aus dem ersten Luftkanal herausgeströmt werden und in einen Zwischenraum, beispielsweise einen Beruhigungsraum zur Abmilderung von Luftturbulenzen, eingeleitet werden, der oberhalb einer Innendecke angeordnet ist. Die Innendecke kann wiederum eine Vielzahl Luftauslässe aufweisen, durch welche Luft hindurchtreten und in den Innenraum geleitet werden kann. Der Begriff "Anordnung im Deckenbereich eines Innenraums" bedeutet also in diesem Sinne auch, dass ein erster Luftkanal bzw. erste Luftauslässe des ersten Luftkanals oberhalb einer Decke des Innenraums angeordnet sein können.

Der zumindest eine zweite Luftkanal verläuft vorzugsweise ebenfalls in Wagenkastenlängsrichtung. Er kann neben dem ersten Luftkanal angeordnet sein, entweder direkt angrenzend oder mit Abstand. Im Fall eines Abstands zwischen dem ersten und dem zweiten Luftkanal sind vorzugsweise Verbindungsmittel, insbesondere ein Verbindungskanal, vorhanden, welcher beide Kanäle miteinander verbindet. In einer vorteilhaften Ausgestaltung sind zwei zweite Luftkanäle vorhanden, die in Fahrtrichtung rechts und links neben dem ersten Luftkanal verlaufen können. Der zweite Luftkanal weist in einer Ausführungsform einen oder mehrere Abzweige auf, die nach unten in den Bodenbereich des Innenraums führbar sind und am Ende jeweils einen oder mehrere zweite Luftauslässe aufweisen.

Der Lüfter ist eine Strömungsmaschine, die vorzugsweise mittels eines rotierenden Laufrads Luft befördern und vorzugsweise auch verdichten kann. Ausführungsformen eines Lüfters sind ein Ventilator oder ein Gebläse.

Die erste Luftmenge und die zweite Luftmenge können als Volumen bemessen werden oder insbesondere als Volumenstrom, d.h. als bewegtes oder transportiertes Luftvolumen pro Zeit. Die erste Luftmenge stellt die gesamte Luftmenge dar, di e durch die Gesamtheit der ersten Luftauslässe strömt. Ebenso stellt die zweite Luftmenge die gesamte Luftmenge dar, die durch die Gesamtheit der zweiten Luftauslässe strömt.

Das Verhältnis von erster Luftmenge zu zweiter Luftmenge kann im Grenzfall derart eingestellt sein, dass eine der beiden Luftmengen null ist, nahezu null ist oder sehr gering ist, was insbesondere, aber nicht ausschließlich, auf die zweite Luftmenge bezogen sein kann. Die Einstellung des Verhältnisses der Luftmengen kann bedeuten, dass zwei Verhältnisse einstellbar sind oder mehr als zwei Verhältnisse einstellbar sind. Bei den Verhältnissen kann es sich um diskrete Verhältnisse innerhalb eines Verhältnisbereiches handeln oder um ein in einem bestimmten Bereich kontinuierlich einstellbares bzw. veränderbares Verhältnis.

Für die erfindungsgemäße Luftverteileinrichtung sind verschiedene Betriebszustände möglich. Beispielsweise kann in einem ersten Betriebszustand der Lüfter so betrieben werden, dass Luft durch den ersten Luftkanal transportiert und überwiegend oder ausschließlich durch die ersten Luftauslässe in den Deckenbereich des Innenraums eingeströmt wird. Dieser Betriebszustand wird vorzugsweise zur Einleitung von Kaltluft in den Innenraum verwendet. Beispielsweise kann der Lüfter auf Nichtbetrieb eingestellt, gesteuert oder geregelt werden, wobei kein durch den Lüfter bewirkter Lufttransport erfolgt. Der Begriff "Betrieb" umfasst somit auch den Nicht-Betrieb. Oder der Lüfter kann langsam betrieben werden, sodass wenig Luft von dem ersten Luftkanal in den zweiten Luftkanal transportiert wird. Oder der Lüfter kann so betrieben werden, dass die Ansaugseite auf der Seite des zweiten Luftkanals ist. Dies wird nachfolgend auch als Umkehrbetreib bezeichnet. Im Umkehrbetrieb kann einem Transport von Luft, vorzugsweise Kaltluft, vom ersten in den zweiten Luftkanal entgegengewirkt werden. Von dem Lüfter kann ein Gegenstrom erzeugt werden, der einem Strom von dem ersten Luftkanal durch die Verbindungsöffnung entgegen wirkt und verhindert oder weitgehend verhindert, dass Luft aus dem ersten Luftkanal durch die Verbindungsöffnung in den zweiten Luftkanal gelangt. Es kann bei dieser Variante der Lüfter so betrieben werden, dass ein durch den Lüfter erzeugter Gegenstrom lediglich den Transport von Luft aus dem ersten in den zweiten Luftkanal verhindert, aber keine oder nur wenig Luft vom zweiten Kanal in den ersten Kanal transportiert wird. Dies kann vorzugsweise durch einen schwachen Betrieb bei vorzugsweise geringer Rotationszahl des Lüfters erreicht werden. Der Betrieb des Lüfters kann beispielsweise bei einer entgegengesetzten Rotationsrichtung eines Lüfterrads erfolgen als bei dem unten dargestellten Betriebszustand, in dem Luft durch den Lüfter in den zweiten Luftkanal transportiert wird.

Kaltluft bedeutet Luft, die kälter ist als die aktuelle Lufttemperatur des Innenraums. Kaltluft kann beispielsweise von einer Klimatisierungseinrichtung zur Verfügung gestellt werden. Warmluft bedeutet Luft, die wärmer ist als die aktuelle Lufttemperatur des Innenraums. Warmluft kann beispielsweise von einer Klimatisierungseinrichtung zur Verfügung gestellt werden.

In einer speziellen Ausführungsform ist der Lüfter so gestaltet, dass er einen Transport von Luft durch die Verbindungsöffnung blockiert oder im Wesentlichen blockiert wenn er nicht in Betrieb ist, also keine Luft aktiv transportiert. Bei einer nicht vollständigen Blockierung der Verbindungsöffnung kann grundsätzlich eine geringe Menge Luft in den zweiten Luftkanal eingeleitet werden und durch die zweiten Luftauslässe in den Bodenbereich eingeströmt werden.

In einer Variante der Erfindung ist ein Sperrmittel oder Ventil vorgesehen, womit die Verbindungsöffnung geschlossen werden kann, um einen Durchtritt von Luft von dem ersten in den zweiten Kanal zu unterbinden.

In einem zweiten Betriebszustand der Luftverteileinrichtung kann der Lüfter so betrieben werden, dass durch den ersten Luftkanal und durch die zumindest eine Verbindungsöffnung Luft in den zweiten Luftkanal transportiert wird. Die Ansaugseite ist dann auf der Seite des ersten Kanals. Dadurch kann die Luft durch die zweiten Luftauslässe in den Bodenbereich des Innenraums eingeströmt werden. In dem zweiten Betriebszustand wird der Lüfter so betrieben, dass ein Lufttransport von dem ersten in den zweiten Kanal erfolgt. Vorzugsweise ist der Lüfter so betreibbar, dass einströmende Luft überwiegend oder ausschließlich in den Bodenbereich durch die zweiten Luftauslässe eingeströmt wird. Es kann in einer besonderen Variante der Lüfter derart betrieben werden, dass aus dem ersten Luftkanal alle oder nahezu alle Luft, die dem ersten Luftkanal zugeführt wird, in den zweiten Luftkanal transportiert wird. Die dem ersten Luftkanal zugeführte Luft kann vollständig oder nahezu vollständig in den zweiten Kanal transportiert werden und ein Ausströmen durch erste Luftauslässe kann unterdrückt oder im Wesentlichen unterdrückt werden. Insbesondere bei Einleitung von Warmluft kann der Lüfter vorzugsweise so betrieben werden, dass die Warmluft im Wesentlichen oder ausschließlich durch die zweiten Luftauslässe in den Bodenbereich eingeströmt wird. Beispielsweise kann der Lüfter hierzu in hohem oder maximalem Betrieb betrieben werden und die Ansaugseite auf der Seite des ersten Kanals liegen.

Weitere Betriebszustände sind möglich, die als Zwischenzustände zu den oben genannten Betriebszuständen betrachtet werden können. Es kann in weiteren Betriebszuständen durch die ersten Luftauslässe und die zweiten Luftauslässe Luft in jeweils verschiedenen Luftmengenverhältnissen eingeströmt werden, beispielsweise, wenn die Luft weder Kaltluft noch Warmluft ist, sondern Raumtemperatur aufweist.

Insbesondere können die erste Luftmenge und die zweite Luftmenge gleich groß oder in etwa gleich groß sein.

Der Lüfter kann wie bereits erwähnt auf Nichtbetrieb, Vollbetrieb oder einen beliebig starken Betrieb zwischen Nichtbetrieb und Vollbetrieb eingestellt, gesteuert und/oder geregelt werden. Es kann dadurch der von dem Lüfter erzeugte Luftvolumenstrom variiert werden, durch entsprechenden Betrieb des Lüfters. Der Volumenstrom bzw. die Stärke des Betriebs kann zum Beispiel durch die Drehzahl eines Lüfterrads, auch bezeichnet als Laufrad, eingestellt werden. Entsprechend kann die Drehzahl des Lüfterrads eingestellt, gesteuert und/oder geregelt werden und der Lüfter dadurch auf Nichtbetrieb, Vollbetrieb, oder einen beliebig starken Betrieb zwischen Nichtbetrieb und Vollbetrieb eingestellt, angesteuert und/oder geregelt werden. Beispielsweise wird im Nichtbetrieb das Lüfterrad nicht gedreht und im Vollbetrieb wird das Lüfterrad mit maximaler Umdrehungszahl gedreht. In einem Betrieb zwischen Nichtbetrieb und Vollbetrieb wird eine Drehzahl zwischen Null und maximaler Umdrehungszahl eingestellt.

Der Lüfter ist hinsichtlich verschiedener Transportrichtungen der durch den Lüfter transportierten Luft betreibbar, von dem ersten Luftkanal in den zweiten Luftkanal oder umgekehrt. Es ist die Transportrichtung nach gewünschtem Betriebszustand oder gewünschter Einströmung von Luft durch erste und/oder zweite Luftauslässe wählbar. Anders ausgedrückt kann die Ansaugseite des Lüfters variiert werden, sodass verschiedene Lufttransportrichtungen einstellbar sind.

In einer Ausgestaltung der Erfindung ist der Lüfter im Bereich der Verbindungsöffnung angeordnet, insbesondere vor der Verbindungsöffnung, betrachtet von der Seite des ersten Kanals, in der Verbindungsöffnung oder hinter der Verbindungsöffnung, betrachtet von der Seite des ersten Kanals. Die Verbindungsöffnung kann, wie oben bereits erwähnt, kanalartig ausgeführt sein, sodass der Lüfter innerhalb eines Verbindungskanals angeordnet sein kann. Durch die Anordnung im Bereich einer Verbindungsöffnung wird ein besonders effektiver Transport von Luft vom ersten Luftkanal in den zweiten Luftkanal erreicht.

In einer Ausführungsform der Erfindung weist die Luftverteileinrichtung eine Steuerungseinrichtung zur Steuerung des Lüfters auf. Mit der Steuerungseinrichtung kann die Art des Betriebs des Lüfters gesteuert werden.

In einer Ausführungsform der Erfindung weist die Luftverteileinrichtung eine Regelungseinrichtung zur Regelung des Lüfters auf. Mit der Regelungseinrichtung kann die Art des Betriebs des Lüfters geregelt werden.

Verschiedene Betriebsarten wurden oben bereits erwähnt, wie Nichtbetrieb (Stillstand) oder Vollbetrieb, bei der der höchste Volumenstrom erzielt wird. Wenn der Lüfter ein Laufrad aufweist, kann mit der Steuerungseinrichtung oder Regelungseinrichtung die Rotationsgeschwindigkeit und/oder Rotationsrichtung des Laufrads gesteuert oder geregelt werden.

In einer speziellen Ausgestaltung ist die Steuerungseinrichtung oder die Regelungseinrichtung ausgestaltet, den Betrieb des Lüfters unter Berücksichtigung der Temperatur der einströmenden Luft zu steuern oder zu regeln. Insbesondere wenn Kaltluft in den Innenraum eingeströmt werden soll, wird der Lüfter so gesteuert oder geregelt, sodass Luft ausschließlich oder im Wesentlichen durch die ersten Luftauslässe in den Deckenbereich eingeströmt wird. Dies kann erreicht werden durch einen Nicht-Betrieb des Lüfters, einen langsamen Betrieb, bei dem wenig Luft von dem ersten Luftkanal in den zweiten Luftkanal transportiert wird, oder durch den zuvor bereits beschriebenen Umkehrbetrieb, bei dem ein Gegenstrom erzeugt wird, der den Luftdurchtritt vom ersten in den zweiten Luftkanal verhindert. Bei Einleitung von Warmluft wird der Lüfter vorzugsweise so gesteuert oder geregelt, dass die Warmluft im Wesentlichen oder ausschließlich durch die zweiten Luftauslässe in den Bodenbereich eingeströmt wird. Beispielsweise kann der Lüfter hierzu auf einen hohen oder maximalen Betrieb gesteuert oder geregelt werden und die Ansaugseite auf der Seite des ersten Kanals liegen. Die Steuerung oder Regelung kann in Abhängigkeit von der Lufttemperatur vorgenommen werden. Die Lufttemperatur kann ermittelt werden oder bekannt sein, zum Beispiel durch Vorgabe einer Lufttemperatur einer Klimatisierungseinrichtung. Die Lufttemperatur kann an die Steuerungseinrichtung oder Regelungseinrichtung übermittelt werden, vorzugsweise automatisiert. Es kann daraufhin die Steuerungseinrichtung oder Regelungseinrichtung den Lüfter so steuern oder regeln, dass eine erste Luftmenge, die durch die ersten Luftauslässe in den Deckenbereich einströmt, und eine zweite Luftmenge, die durch die zweiten Luftauslässe in den Bodenbereich einströmt, in das erwünschte Verhältnis gebracht werden, welches von der Lufttemperatur abhängt. Bei Kaltluft, bzw. der Temperatur von Kaltluft, kann die Steuerungseinrichtung oder die Regelungseinrichtung so eingestellt werden, dass die Kaltluft ausschließlich oder im Wesentlichen durch die ersten Luftauslässe in den Deckenbereich eingeströmt wird, wie oben beschrieben. Bei Warmluft, bzw. der Temperatur von Warmluft, kann die Steuerungseinrichtung oder die Regelungseinrichtung so eingestellt werden, dass die Warmluft ausschließlich oder im Wesentlichen durch die zweiten Luftauslässe in den Bodenbereich eingeströmt wird, wie oben beschrieben.

Bei einer Lufttemperatur, die der Temperatur des Innenraums des Schienenfahrzeugs entspricht, kann der Lüfter mit der Steuerungseinrichtung so gesteuert oder der Regelungseinrichtung so geregelt werden, dass in etwa zu gleichen Anteilen Luft durch die ersten Luftauslässe und durch die zweiten Luftauslässe transportiert wird. Diese Fälle stellen bevorzugte Einzelbeispiele dar. Die Steuerung oder Regelung kann je nach Bedarf und Vorgabe der Luftverteilung in Abhängigkeit von der Temperatur erfolgen.

In einem Aspekt weist die Luftverteileinrichtung ein Klimagerät mit einem Luftausgang für gekühlte oder erwärmte Luft auf, wobei der erste Luftkanal an den Luftausgang gekoppelt ist. Es wird hierbei durch den zentralen Luftausgang gekühlte oder erwärmte Luft in den ersten Luftkanal eingeströmt. Durch die bereits erwähnte Verbindungsöffnung, durch welche der erste Luftkanal und der zweite Luftkanal miteinander verbunden sind, kann Luft dann aus dem ersten Luftkanal in den zweiten Luftkanal eingeströmt werden. Der Vorteil ist, dass keine zwei voneinander getrennten Kanalsysteme, beispielsweise für Warmluft und Kaltluft vorhanden sind, die jeweils an einen separaten Luftausgang eines Klimageräts gekoppelt sind und das Klimagerät somit auch keine zwei separaten Luftausgänge aufweist. Hiermit werden bauliche Vorteile erzielt, da nicht für Warm- und Kaltluftführung voneinander getrennte Kanalsysteme durch ein Fahrzeug geführt werden müssen.

In einem weiteren Aspekt betrifft die Erfindung ein Schienenfahrzeug, das eine vorangehend beschriebene Luftverteileinrichtung aufweist. Die Luftverteileinrichtung ist insbesondere im Wagenkasten eines oder mehrerer Wagen des Schienenfahrzeugs installiert. Ein bevorzugtes Schienenfahrzeug ist eine Straßenbahn, eine S-Bahn, eine U-Bahn, eine Regionalbahn oder eine Fernbahn.

In einem weiteren Aspekt betrifft die Erfindung ein Verfahren zur Steuerung einer Luftstromverteilung im Innenraum eines Schienenfahrzeugs, wobei eine Luftverteileinrichtung verwendet wird mit
- einem ersten Luftkanal, aufweisend erste Luftauslässe, die in einem Deckenbereich eines Innenraums des Schienenfahrzeugs angeordnet sind,
- zumindest einem zweiten Luftkanal, aufweisend zweite Luftauslässe, die in einem Bodenbereich des Innenraums des Schienenfahrzeugs angeordnet sind,
- einer Verbindungsöffnung, durch welche der erste Luftkanal und der zumindest eine zweite Luftkanal miteinander verbunden sind,
- zumindest einem Lüfter, der zum Beförderung von Luft von dem ersten Luftkanal in den zweiten Luftkanal eingerichtet ist,
und das Verfahren aufweist:
- Transport von Luft durch den ersten Luftkanal,
- Einstellung, Steuerung und/oder Regelung der Art des Betriebs des Lüfters, vorzugsweise hinsichtlich der Größe eines transportierten Luftvolumenstroms und/oder einer Transportrichtung transportierter Luft,
- Einstellung, Steuerung und/oder Regelung des Verhältnisses der Luftmenge, die durch die ersten Luftauslässe in den Deckenbereich strömt, zur Luftmenge, die durch den zweiten Kanal die zweiten Luftauslässe in den Bodenbereich strömt in Abhängigkeit von der Art des Betriebs des Lüfters.

Zur Durchführung des Verfahrens kann eine Luftverteileinrichtung eingesetzt werden, wie vorangehend beschrieben.

Die durch den ersten Luftkanal transportierte oder durch den ersten Luftkanal zugeführte Luft wird auch als Frischluft oder als Zuluft bezeichnet. Diese Frischluft kann von einem Klimagerät klimatisiert sein. Alternativ kann die Luft Außenluft sein.

Je nach Art des Betriebs des Lüfters kann Luft von dem ersten Luftkanal durch die Verbindungsöffnung in den zweiten Luftkanal transportiert werden oder umgekehrt, oder es kann kein Lufttransport erfolgen oder ein Lufttransport unterbunden werden, wie noch erläutert.

In einer Ausgestaltung des Verfahrens wird die Einstellung, Steuerung und/oder Regelung des Betriebs des Lüfters in Abhängigkeit von der Temperatur der durch die Luftverteileinrichtung transportierten Luft vorgenommen. Wie vorangehend bereits beschrieben, kann je nach Betrieb des Lüfters Kaltluft vorwiegend oder ausschließlich in den Deckenbereich eingeströmt werden und Warmluft im Wesentlichen oder ausschließlich in den Bodenbereich eines Innenraums eingeströmt werden.

Eine Steuerungseinrichtung oder Regelungseinrichtung kann Verwendung finden. Es kann der Lüfter von der Steuerungseinrichtung oder Regelungseinrichtung so gesteuert oder geregelt werden, dass Kaltluft vorwiegend oder ausschließlich in den Deckenbereich eingeströmt wird und Warmluft im Wesentlichen oder ausschließlich in den Bodenbereich eines Innenraums eingeströmt wird.

Die Steuerungseinrichtung oder die Regelungseinrichtung kann den Betrieb des Lüfters in Abhängigkeit einer tatsächlichen Lufttemperatur einer durch den ersten Luftkanal transportierten oder durch den ersten Luftkanal zugeführten Luft steuern oder regeln. Die tatsächliche Lufttemperatur kann beispielsweise durch eine Temperaturmesseinrichtung ermittelt werden, deren Messgröße an die Steuerungseinrichtung oder Regelungseinrichtung übermittelt werden kann.

In einer anderen Variante kann die Steuerungseinrichtung oder die Regelungseinrichtung den Betrieb des Lüfters in Abhängigkeit einer Solltemperatur der durch den ersten Luftkanal transportierten oder durch den ersten Luftkanal zugeführten Luft steuern oder regeln. Die Solltemperatur kann eine Temperatur sein, die einem Klimagerät vorgegeben wird.

In einer bereits anhand eines Betriebszustandes der Luftverteileinrichtung beschriebenen Verfahrensvariante wird Luft durch den ersten Luftkanal und überwiegend oder ausschließlich durch die ersten Luftauslässe in den Deckenbereich des Innenraums des Schienenfahrzeugs transportiert. Hierbei ist die Luft vorzugsweise Kaltluft, insbesondere Kaltluft aus einem Klimagerät.

In einer anderen Variante des Verfahrens wird der Lüfter so betrieben, dass Luft durch den ersten Luftkanal, die Verbindungsöffnung, den zweiten Luftkanal und die zweiten Luftauslässe in den Bodenbereich des Innenraums des Schienenfahrzeugs transportiert wird. Der Betrieb kann so erfolgen, dass Luft überwiegend oder ausschließlich in den Bodenbereich transportiert wird. Die so transportierte Luft ist vorzugsweise Warmluft. Wie vorangehend bereits anhand der Luftverteileinrichtung beschrieben, können durch entsprechenden Betrieb des Lüfters beliebige Luftmengenverhältnisse eingestellt werden, die vorzugsweise in Abhängigkeit von der Temperatur gewählt werden.

Nachfolgend wird die Erfindung anhand von Ausführungsbeispielen beschrieben. Es zeigen:
- Fig. 1: eine erfindungsgemäße Luftverteileinrichtung in einer Draufsicht,
- Fig. 2: eine erfindungsgemäße Luftverteileinrichtung im Querschnitt und
- Fig. 3: eine in einen Wagenkasten eingebaute Luftverteileinrichtung im Querschnitt.

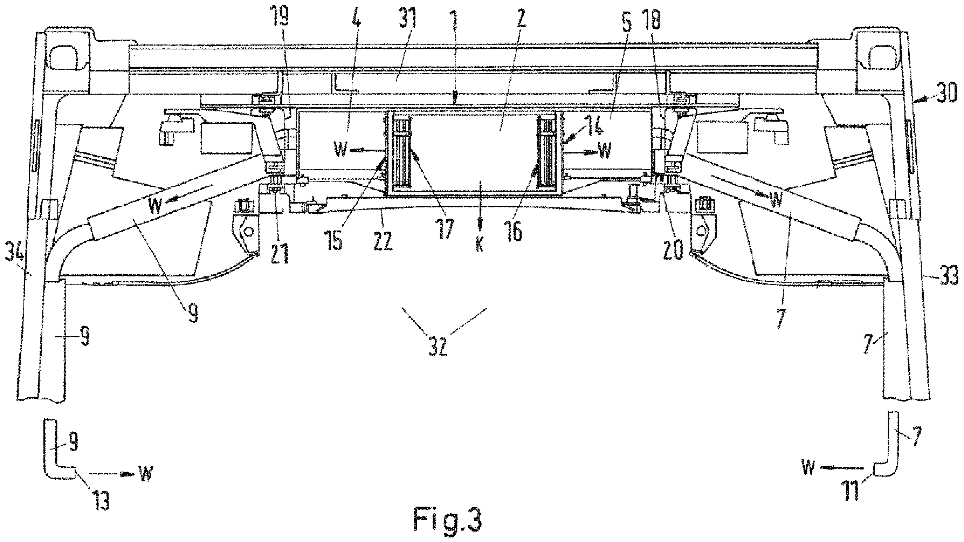

Die Luftverteileinrichtung 1 weist einen ersten Luftkanal 2 mit ersten Luftauslässen 3 auf, von denen beispielhaft zwei Gruppen Luftauslässe mit Bezugszeichen hervorgehoben sind. Die ersten Luftauslässe 3 sind in Form einer Vielzahl paralleler Schlitze ausgeprägt. Zwei zweite Luftkanäle 4 und 5 sind beidseitig des ersten Luftkanals 2 in Längsrichtung angeordnet. Die zweiten Luftkanäle 4, 5 weisen Abzweige 6, 7, 8, 9 auf, die seitlich abzweigen. Die Abzweige 6, 7, 8, 9 verlaufen zunächst seitlich abzweigend auf Höhe der zweiten Kanäle 4, 5 und sind anschließend nach unten, in Blickrichtung des Betrachters in die Zeichnungsebene hinein, abgewinkelt, sodass sie entlang einer Seitenwand eines Wagenkastens nach unten, in den unteren Bereich des Wagenkastens bzw. des Innenraums geführt werden können, wie in Fig. 3 gezeigt. Am Ende der Abzweige sind zweite Luftauslässe 10, 11, 12, 13 angeordnet, durch welche Luft ausströmen kann. Die Luftauslässe können beliebig gestaltet sein, beispielsweise jeweils am Ende eines abgewinkelten Kanals 7, 9 angeordnet sein, wie bei den Auslässen 11, 13 am Beispiel der Fig. 3 gezeigt.

Die Verbindungsöffnung 14 verbindet den ersten Luftkanal 2 mit dem zweiten Luftkanal 5 und die Verbindungsöffnung 15 verbindet den ersten Luftkanal 2 mit dem zweiten Luftkanal 4. Vor der Verbindungsöffnung 14 ist auf der Seite des zweiten Kanals 5 ein Lüfter 16 platziert und vor der Verbindungsöffnung 15 ist auf der Seite des zweiten Kanals 4 ein Lüfter 17 platziert.

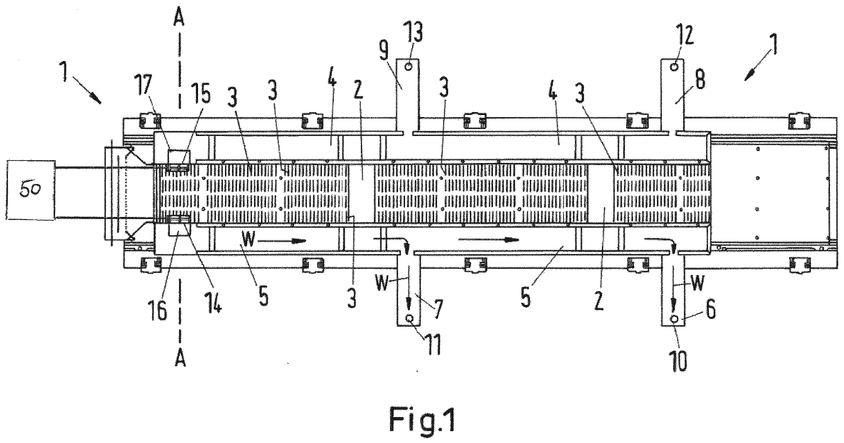

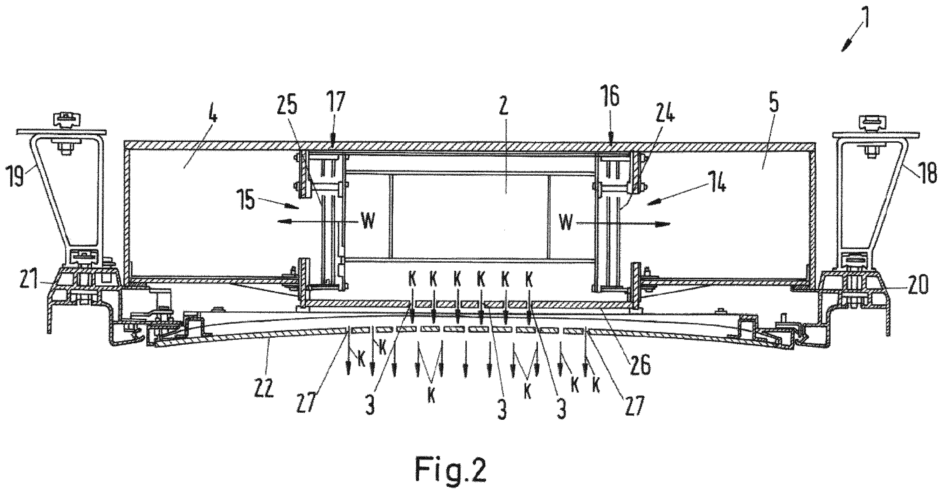

Fig. 2 zeigt einen Querschnitt durch die Luftverteileinrichtung 1 aus Fig. 1 entlang der Linie A-A. Der Blick des Betrachters geht also in Längsrichtung L eines Wagenkastens.

Dargestellt in Fig. 2 sind Aufhängungen 18, 19 zur Befestigung der Luftverteileinrichtung 1 an einer Wagenkastendecke sowie in Längsrichtung (Blickrichtung in Fig. 2) verlaufende Träger 20, 21, an denen die Luftkanäle 2, 4, 5, die Aufhängungen 18, 19 sowie eine Innendecke 22 befestigt sind.

Im Betrieb der Lüfter 16 und 17 wird Warmluft, bezeichnet mit den Pfeilen W, von dem ersten Luftkanal 2 durch die Öffnungen 14, 15 in die zweiten Luftkanäle 4, 5 transportiert. Die Warmluft W in dem ersten Luftkanal 2 kann von einem Klimagerät aus in den ersten Luftkanal 2 eingeleitet werden.

Beispielhafte Warmluftströme in den zweiten Kanälen sind mit Pfeilen W auch in Fig. 1 bei dem zweiten Kanal 5 gezeigt. Ferner ist in Fig. 1 gezeigt, wie der Warmluftstrom W in die Abzweige 6, 7 zu den zweiten Luftauslässen 10, 11 geleitet wird. Der Warmlufttransport erfolgt durch Betrieb der Laufräder 24, 25 der jeweiligen Lüfter 16, 17. Die Regelung der Lüfter 16, 17 kann durch eine Regelungseinrichtung 50 erfolgen, die mit den Lüftern 16, 17 verbunden ist. Die Regelungseinrichtung kann einen nicht dargestellten Temperaturfühler aufweisen, der die Lufttemperatur innerhalb des ersten Kanals 2 erfasst. Alternativ kann die Regelungseinrichtung 50 mit einem ebenfalls nicht näher dargestellten Klimagerät oder mit dessen Steuerung verbunden sein und es kann eine Solltemperatur für Klimatisierungsluft an die Regelungseinrichtung übermittelt werden. Aufgrund dieser Solltemperatur kann die Regelungseinrichtung 50 den Betrieb der Lüfter 16, 17 regeln. Geregelt wird insbesondere die Drehgeschwindigkeit der Laufräder 24, 25. Alternativ zu einer Regelungseinrichtung kann die Einrichtung 50 eine Steuerungseinrichtung sein.

Wenn die durch den ersten Kanal 2 zugeführte Luft Kaltluft ist, wird der Betrieb der Lüfter 16, 17 eingestellt oder die Drehgeschwindigkeit der Laufräder 24, 25 zumindest gedrosselt. Mit Pfeilen K bezeichnete Kaltluft wird dann ausschließlich oder vorwiegend durch die ersten Luftauslässe 3 im Boden des ersten Kanals 2 geleitet. Unter dem Boden 26 des ersten Kanals 2 ist die Decke 22 für den Innenraum des Schienenfahrzeugs aufgehängt. Die Kaltluft K strömt durch den Zwischenraum und durch weitere Auslässe 27 in der Decke 22, von denen zwei beispielhaft eingezeichnet sind.

Fig. 3 zeigt den Einbau der Luftverteileinrichtung 1 gemäß Fig. 1 und 2 in dem Wagenkasten 30 eines Schienenfahrzeugs. Mittels der Aufhängungen 18, 19 ist die Luftverteileinrichtung 1 an einem Querträger 31 des Daches befestigt. Entlang der Länge der Luftverteileinrichtung 1, die in Fig. 1 dargestellt ist, können mehrere Aufhängungen 18, 19 entlang der Luftverteileinrichtung angeordnet sein und jeweils an einem weiteren Dachträger, analog zu dem Träger 31 befestigt sein.

Kaltluft K wird bei Kühlung des Innenraums 32 im Bereich der Decke 22 eingeleitet. Beispielhaft sind die Ströme von Kaltluft mit dem Pfeil K und die Ströme von Warmluft mit den Pfeilen W dargestellt. Erkennbar sind die bereits in Fig. 1 in einer Draufsicht dargestellten Abzweige 7, 9 von den zweiten Luftkanälen 4, 5. Die Abzweige sind zunächst seitlich leicht schräg nach unten geführt. Im Bereich der Seitenwände 33, 34 sind die Abzweige im Wesentlichen senkrecht nach unten geführt. Die Abzweigkanäle 7, 9 enden an den zweiten Luftauslässen 11 bzw. 13 im Bodenbereich des Innenraums 32, wo die Warmluft W ausströmt. Der Wagenkasten 30 ist nicht in voller Höhe dargestellt. Im Bereich der Seitenwände sind die Abzweige 7, 9 der zweiten Kanäle 4, 5 unterbrochen dargestellt.

## Patentansprüche

1. Luftverteileinrichtung (1) zur Verteilung von einströmender Luft im Innenraum eines Schienenfahrzeugs, aufweisend
- zumindest einen ersten Luftkanal (2), aufweisend erste Luftauslässe (3), die in einem Deckenbereich eines Innenraums (32) des Schienenfahrzeugs anordenbar sind,
- zumindest einen zweiten Luftkanal (4, 5), aufweisend zweite Luftauslässe (10, 11, 12, 13), die in einem Bodenbereich des Innenraums (32) des Schienenfahrzeugs anordenbar sind,
- zumindest eine Verbindungsöffnung (14, 15), durch welche der zumindest eine erste Luftkanal (2) und der zumindest eine zweite Luftkanal (4, 5) miteinander verbunden sind,
- zumindest einen Lüfter (16, 17), der zum Beförderung von Luft von dem ersten Luftkanal (2) in den zweiten Luftkanal (4, 5), oder umgekehrt, eingerichtet ist, wobei durch die Art des Betriebs des Lüfters eine erste Luftmenge, die durch die ersten Luftauslässe (3) in den Deckenbereich einströmt, und eine zweite Luftmenge, die durch die zweiten Luftauslässe (10, 11, 12, 13) in den Bodenbereich einströmt, in ihrem Verhältnis zueinander einstellbar sind.

2. Luftverteileinrichtung nach Anspruch 1, wobei der Lüfter (16, 17) im Bereich der Verbindungsöffnung (14, 15) angeordnet ist.

3. Luftverteileinrichtung nach einem der vorangehenden Ansprüche, aufweisend eine Steuerungseinrichtung zur Steuerung der Art des Betriebs des Lüfters oder eine Regelungseinrichtung zur Regelung der Art des Betriebs des Lüfters (16, 17).

4. Luftverteileinrichtung nach Anspruch 3, wobei die Steuerungseinrichtung oder Regelungseinrichtung (50) ausgestaltet ist, den Betrieb des Lüfters unter Berücksichtigung der Temperatur der Luft zu steuern oder zu regeln.

5. Luftverteileinrichtung nach einem der vorangehenden Ansprüche, aufweisend ein Klimagerät mit einem zentralen Luftausgang für gekühlte oder erwärmte Luft, wobei der erste Luftkanal (2) an den zentralen Luftausgang gekoppelt ist, sodass durch den zentralen Luftausgang gekühlte oder erwärmte Luft in den ersten Luftkanal einströmbar ist.

6. Luftverteileinrichtung nach einem der vorangehenden Ansprüche, wobei die Verbindungsöffnung eine Öffnung in einer Wand ist, die den ersten Luftkanal von dem zweiten Luftkanal trennt, oder wobei die Verbindungsöffnung innerhalb eines Verbindungskanals gebildet ist, der den ersten Luftkanal und den zweiten Luftkanal verbindet.

7. Schienenfahrzeug, aufweisend eine Luftverteileinrichtung nach einem der Ansprüche 1-6.

8. Verfahren zur Steuerung einer Luftstromverteilung im Innenraum (32) eines Schienenfahrzeugs, wobei eine Luftverteileinrichtung (1) verwendet wird mit
- zumindest einem ersten Luftkanal (2), aufweisend erste Luftauslässe (3), die in einem Deckenbereich eines Innenraums (32) des Schienenfahrzeugs angeordnet sind,
- zumindest einem zweiten Luftkanal (4, 5), aufweisend zweite Luftauslässe (10, 11, 12, 13), die in einem Bodenbereich des Innenraums (32) des Schienenfahrzeugs angeordnet sind,
- einer Verbindungsöffnung (14, 15), durch welche der zumindest eine erste Luftkanal (2) und der zumindest eine zweite Luftkanal (4, 5) miteinander verbunden sind,
- zumindest einem Lüfter (16, 17), der zum Beförderung von Luft von dem ersten Luftkanal (2) in den zweiten Luftkanal (4, 5), oder umgekehrt, eingerichtet ist,
und das Verfahren aufweist:
- Transport von Luft durch den ersten Luftkanal (2),
- Einstellung der Art des Betriebs des Lüfters (16, 17),
- Einstellung des Verhältnisses der Luftmenge, die durch die ersten Luftauslässe (3) in den Deckenbereich strömt, zur Luftmenge, die durch die zweiten Luftauslässe (10, 11, 12, 13) in den Bodenbereich strömt, in Abhängigkeit von der Art des Betriebs des Lüfters (16, 17).

9. Verfahren nach Anspruch 8, wobei die Einstellung der Art des Betriebs des Lüfters (16, 17) in Abhängigkeit von der Temperatur der Luft vorgenommen wird.

10. Verfahren nach Anspruch 8 oder 9, wobei der Lüfter (16, 17) so betrieben wird, dass Luft durch den ersten Luftkanal (2) und überwiegend oder ausschließlich durch die ersten Luftauslässe (3) in den Deckenbereich des Innenraums (32) des Schienenfahrzeugs transportiert wird.

11. Verfahren nach Anspruch 10, wobei die Luft Kaltluft ist.

12. Verfahren nach Anspruch 8 oder 9, wobei der Lüfter so betrieben wird, dass Luft durch den ersten Luftkanal (2), die Verbindungsöffnung (14, 15), den zweiten Luftkanal (4, 5) und die zweiten Luftauslässe (10, 11, 12, 13) in den Bodenbereich des Innenraums (32) des Schienenfahrzeugs transportiert wird.

13. Verfahren nach Anspruch 12, wobei der Lüfter so betrieben wird, dass Luft überwiegend oder ausschließlich in den Bodenbereich transportiert wird.

14. Verfahren nach Anspruch 12 oder 13, wobei die Luft Warmluft ist.

## Claims

1. Air distribution device (1) for distributing inflowing air in the interior of a rail vehicle, having
- at least one first air channel (2) having first air outlets (3) which are able to be arranged in a ceiling region of an interior (32) of the rail vehicle,
- at least one second air channel (4, 5) having second air outlets (10, 11, 12, 13) which are able to be arranged in a floor region of the interior (32) of the rail vehicle,
- at least one connection opening (14, 15) by which the at least one first air channel (2) and the at least one second air channel (4, 5) are connected to one another,
- at least one fan (16, 17) which is set up for conveying air from the first air channel (2) into the second air channel (4, 5), or vice versa, wherein, by way of the mode of operation of the fan, a first air quantity which flows through the first air outlets (3) into the ceiling region and a second air quantity which flows through the second air outlets (10, 11, 12, 13) into the floor region are settable in their ratio to one another.

2. Air distribution device according to Claim 1, wherein the fan (16, 17) is arranged in the region of the connection opening (14, 15).

3. Air distribution device according to either of the preceding claims, having a control device for controlling the mode of operation of the fan, or having a regulating device for regulating the mode of operation of the fan (16, 17).

4. Air distribution device according to Claim 3, wherein the control device or regulating device (50) is configured to control or regulate the operation of the fan, with the temperature of the air taken into consideration.

5. Air distribution device according to one of the preceding claims, having an air conditioner with a central air outlet for cooled or heated air, wherein the first air channel (2) is coupled to the central air outlet such that cooled or heated air is able to flow through the central air outlet into the first air channel.

6. Air distribution device according to one of the preceding claims, wherein the connection opening is an opening in a wall which separates the first air channel from the second air channel, or wherein the connection opening is formed within a connection channel which connects the first air channel and the second air channel.

7. Rail vehicle having an air distribution device according to one of Claims 1-6.

8. Method for controlling an air flow distribution in the interior (32) of a rail vehicle, wherein use is made of an air distribution device (1) having
- at least one first air channel (2) having first air outlets (3) which are arranged in a ceiling region of an interior (32) of the rail vehicle,
- at least one second air channel (4, 5) having second air outlets (10, 11, 12, 13) which are arranged in a floor region of the interior (32) of the rail vehicle,
- a connection opening (14, 15) by which the at least one first air channel (2) and the at least one second air channel (4, 5) are connected to one another,
- at least one fan (16, 17) which is set up for conveying air from the first air channel (2) into the second air channel (4, 5), or vice versa,
and the method comprises:
- transporting air through the first air channel (2),
- setting the mode of operation of the fan (16, 17),
- setting, in a manner dependent on the mode of operation of the fan (16, 17), the ratio of the air quantity which flows through the first air outlets (3) into the ceiling region to the air quantity which flows through the second air outlets (10, 11, 12, 13) into the floor region.

9. Method according to Claim 8, wherein the setting of the mode of operation of the fan (16, 17) is carried out in a manner dependent on the temperature of the air.

10. Method according to Claim 8 or 9, wherein the fan (16, 17) is operated such that air is transported through the first air channel (2) and predominantly or exclusively through the first air outlets (3) into the ceiling region of the interior (32) of the rail vehicle.

11. Method according to Claim 10, wherein the air is cold air.

12. Method according to Claim 8 or 9, wherein the fan is operated such that air is transported through the first air channel (2), the connection opening (14, 15), the second air channel (4, 5) and the second air outlets (10, 11, 12, 13) into the floor region of the interior (32) of the rail vehicle.

13. Method according to Claim 12, wherein the fan is operated such that air is transported predominantly or exclusively into the floor region.

14. Method according to Claim 12 or 13, wherein the air is warm air.

## Revendications

1. Dispositif de distribution d'air (1) pour la distribution d'air entrant dans l'espace intérieur d'un véhicule ferroviaire, présentant
- au moins un premier canal d'air (2), présentant des premières sorties d'air (3), qui peuvent être disposées dans une région de plafond d'un espace intérieur (32) du véhicule ferroviaire,
- au moins un deuxième canal d'air (4, 5), présentant des deuxièmes sorties d'air (10, 11, 12, 13), qui peuvent être disposées dans une région de sol de l'espace intérieur (32) du véhicule ferroviaire,
- au moins une ouverture de communication (14, 15), par laquelle ledit au moins un premier canal d'air (2) et ledit au moins un deuxième canal d'air (4, 5) sont raccordés l'un à l'autre,
- au moins un ventilateur (16, 17), qui est conçu pour le transport d'air du premier canal d'air (2) au deuxième canal d'air (4, 5) ou inversement, dans lequel un premier débit d'air, qui pénètre dans la région de plafond par les premières sorties d'air (3), et un deuxième débit d'air, qui pénètre dans la région de sol par les deuxièmes sorties d'air (10, 11, 12, 13), peuvent être réglés quant à leurs proportions l'un par rapport à l'autre par le mode de fonctionnement du ventilateur.

2. Dispositif de distribution d'air selon la revendication 1, dans lequel le ventilateur (16, 17) est disposé dans la région de l'ouverture de communication (14, 15).

3. Dispositif de distribution d'air selon l'une quelconque des revendications précédentes, présentant un dispositif de commande pour la commande du mode de fonctionnement du ventilateur ou un dispositif de régulation pour la régulation du mode de fonctionnement du ventilateur (16, 17).

4. Dispositif de distribution d'air selon la revendication 3, dans lequel le dispositif de commande ou le dispositif de régulation (50) est configuré de façon à commander ou à réguler le mode de fonctionnement du ventilateur en tenant compte de la température de l'air.

5. Dispositif de distribution d'air selon l'une quelconque des revendications précédentes, présentant un appareil de climatisation avec une sortie d'air centrale pour de l'air refroidi ou réchauffé, dans lequel le premier canal d'air (2) est couplé à la sortie d'air centrale, de telle manière que de l'air refroidi ou réchauffé puisse s'écouler dans le premier canal d'air par la sortie d'air centrale.

6. Dispositif de distribution d'air selon l'une quelconque des revendications précédentes, dans lequel l'ouverture de communication est une ouverture dans une paroi, qui sépare le premier canal d'air du deuxième canal d'air, ou dans lequel l'ouverture de communication est formée à l'intérieur d'un canal de liaison, qui relie le premier canal d'air et le deuxième canal d'air.

7. Véhicule ferroviaire, présentant un dispositif de distribution d'air selon l'une quelconque des revendications 1 à 6.

8. Procédé de commande d'une distribution d'écoulement d'air dans l'espace intérieur (32) d'un véhicule ferroviaire, dans lequel on utilise un dispositif de distribution d'air (1) avec
- au moins un premier canal d'air (2), présentant des premières sorties d'air (3), qui sont disposées dans une région de plafond d'un espace intérieur (32) du véhicule ferroviaire,
- au moins un deuxième canal d'air (4, 5), présentant des deuxièmes sorties d'air (10, 11, 12, 13), qui sont disposées dans une région de sol de l'espace intérieur (32) du véhicule ferroviaire,
- une ouverture de communication (14, 15), par laquelle ledit au moins un premier canal d'air (2) et ledit au moins un deuxième canal d'air (4, 5) sont raccordés l'un à l'autre,
- au moins un ventilateur (16, 17), qui est conçu pour le transport d'air du premier canal d'air (2) au deuxième canal d'air (4, 5) ou inversement,
et le procédé présente:
- le transport d'air à travers le premier canal d'air (2),
- le réglage du mode de fonctionnement du ventilateur (16, 17),
- le réglage des proportions du débit d'air, qui s'écoule dans la région de plafond par les premières sorties d'air (3), par rapport au débit d'air, qui s'écoule dans la région de sol par les deuxièmes sorties d'air (10, 11, 12, 13), en fonction du mode de fonctionnement du ventilateur (16, 17).

9. Procédé selon la revendication 8, dans lequel on opère le réglage du mode de fonctionnement du ventilateur (16, 17) en fonction de la température de l'air.

10. Procédé selon la revendication 8 ou 9, dans lequel on conduit le ventilateur (16, 17) de telle manière que de l'air soit transporté à travers le premier canal d'air (2) et principalement ou exclusivement à travers les premières sorties d'air (3) dans la région de plafond de l'espace intérieur (32) du véhicule ferroviaire.

11. Procédé selon la revendication 10, dans lequel l'air est de l'air froid.

12. Procédé selon la revendication 8 ou 9, dans lequel on conduit le ventilateur de telle manière que de l'air soit transporté à travers le premier canal d'air (2), l'ouverture de communication (14, 15), le deuxième canal d'air (4, 5) et les deuxièmes sorties d'air (10, 11, 12, 13) dans la région de sol de l'espace intérieur (32) du véhicule ferroviaire.

13. Procédé selon la revendication 12, dans lequel on conduit le ventilateur de telle manière que l'air soit transporté principalement ou exclusivement dans la région de sol.

14. Procédé selon la revendication 12 ou 13, dans lequel l'air est de l'air chaud.
